# EUROPÄISCHE PATENTSCHRIFT

(11) **EP 3 933 217 B1**
(45) Veröffentlichungstag und Bekanntmachung des Hinweises auf die Patenterteilung: **28.06.2023**
(21) Anmeldenummer: 21174462.8
(22) Anmeldetag: 18.05.2021
(51) Int. Cl.: F16B 12/20, A47B 47/05, F16B 12/10

(54) **WERKZEUGLOSER FRONTANBINDUNGSBESCHLAG**
TOOL-FREE FRONT ATTACHMENT FITTING
FERRURE DE LIAISON AVANT SANS OUTIL

(30) Priorität: 02.07.2020 DE 202020103851 U
(43) Veröffentlichungstag der Anmeldung: 05.01.2022
(73) Patentinhaber: Häfele Berlin GmbH & Co KG, 12307 Berlin (DE)
(72) Erfinder: Birkner, Robert, 12524 Berlin (DE)
(74) Vertreter: Kohler Schmid Möbus Patentanwälte

(56) Entgegenhaltungen:
- EP-A1- 0 755 640
- ES-A1- 2 150 355
- FR-A1- 2 782 113
- US-A- 5 711 054
- US-A1- 2005 196 249

## Beschreibung

Die Erfindung betrifft einen Beschlag, bestehend aus zwei im montierten Zustand miteinander zusammenwirkenden Beschlagteilen zur werkzeuglosen Befestigung jeweils in einer Bohrung einer Platte, insbesondere Möbelplatte.

Frontanbindungsbeschläge dienen zur Befestigung einer Frontplatte am restlichen Möbelkorpus, z.B. eine Klappenbefestigung am Möbelkorpus, und werden üblicherweise mittels Schrauben an die Frontplatte angeschraubt.

Die Erfindung sieht einen Beschlag gemäß Anspruch 1 vor.

Die Spreizkontur kann ihren maximalen Abstand zur Drehachse in jedem beliebigen Winkel zur Drehachse haben, jedoch ist es bevorzugt, wenn der maximale Abstand in Richtung des Hebelarms oder rechtwinklig dazu verläuft.

Besonders bevorzugt weist die in Spreizdrehrichtung vordere Seite des Hebelarms am freien Ende des Hebelarms eine, gesehen in Spreizdrehrichtung, zurückversetzte stufen- oder S-förmige Seitenkontur auf, die punktsymmetrisch bezüglich einer Symmetrieachse ist, welche parallel zur Drehachse verläuft und in einer parallel zum Hebelarm verlaufenden Radialebene der Drehachse liegt. Die zurückversetzte Seitenkontur bildet in Spreizdrehrichtung einen Drehanschlag.

Vorzugsweise weist die Rasteinrichtung einen Rastvorsprung und eine Rastmulde auf, die an zwei der Drehachse abgewandten Stirnseiten des Hebelarms punktsymmetrisch bezüglich einer Symmetrieachse angeordnet sind, welche parallel zur Drehachse verläuft und in einer parallel zum Hebelarm verlaufenden Radialebene der Drehachse liegt.

Die Erfindung betrifft auch einen Beschlag, z.B. Frontanbindungsbeschlag, der aus zwei wie oben ausgebildeten, vorzugsweise identischen Beschlagteilen gebildet ist. Wenn die beiden Beschlagteile zueinander um 180° verdreht angeordnet sind, sind die Hebelarme entlang einer Linie ausgerichtet. Erfindungsgemäß liegen die freien Enden der beiden Hebelarme stirnseitig aneinander an, wobei die Rasteinrichtungen der beiden Beschlagteile miteinander zusammenwirken.

Die Erfindung betrifft auch eine Anordnung mit einer Platte, insbesondere Möbelplatte, mit zwei Bohrungen und mit einem wie oben ausgebildeten Beschlag (z.B. Frontanbindungsbeschlag), wobei das eine Beschlagteil mit seiner Spreizmuffe in die eine Bohrung und das andere Beschlagteil mit seiner Spreizmuffe in die andere Bohrung eingesetzt und jeweils in die Enddrehposition gedreht wird, wobei in den Enddrehpositionen der beiden Beschlagteile die beiden Beschlagteile zueinander um 180° verdreht angeordnet sind, ihre Hebelachsen entlang einer Linie ausgerichtet sind, die freien Enden der beiden Hebelarme stirnseitig aneinander anliegen und die Rasteinrichtungen der beiden Beschlagteile miteinander zusammenwirken.

Für eine Frontanbindung werden in einer Platte zwei Bohrungen mit einem vorbestimmten Abstand benötigt. In diese Bohrungen werden die Spreizmuffen zweier Beschlagteile mit 180°-Versatz gesteckt. Durch eine 90°-Drehung des Beschlaggehäuses gegenüber der Spreizmuffe in die Enddrehposition werden die Spreizmuffen in den Bohrungen fest verspannt. In den Enddrehpositionen liegen die beiden Beschlaggehäuse vorzugsweise jeweils in Spreizdrehrichtung aneinander an, um so die beiden Beschlaggehäuse gegenseitig vor einem Überdrehen zu sichern. Vorzugsweise greifen dabei die Hebelarme, insbesondere S-förmig, ineinander und sind miteinander verrastet.

Weitere Vorteile der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fign. 1a-1c: das erfindungsgemäße Beschlagteil in einer perspektivischen Ansicht (Fig. 1a), in einem Längsschnitt (Fig. 1b) und in einer Explosionsdarstellung (Fig. 1c);
- Fign. 2a- 2c: eine Detailansicht einer in Fig. 1 gezeigten Spreizmuffe des erfindungsgemäßen Beschlagteils in einer Draufsicht von unten (Fig. 2a), in einer Seitenansicht (Fig. 2b) und in einer Draufsicht von oben (Fig. 2c);
- Fign. 3a, 3b: das erfindungsgemäße Beschlagteil in einer nicht-aufgespreizten Ausgangsdrehstellung (Fig. 3a) und in einer aufgespreizten Enddrehstellung (Fig. 3b);
- Fig. 4: einen erfindungsgemäßen Frontanbindungsbeschlag aus zwei ineinandergreifenden, erfindungsgemäßen Beschlagteilen in einer perspektivischen Ansicht; und
- Fign. 5a-5c: die Montage des in Fig. 4 gezeigten, erfindungsgemäßen Frontanbindungsbeschlags an einer Möbelplatte.

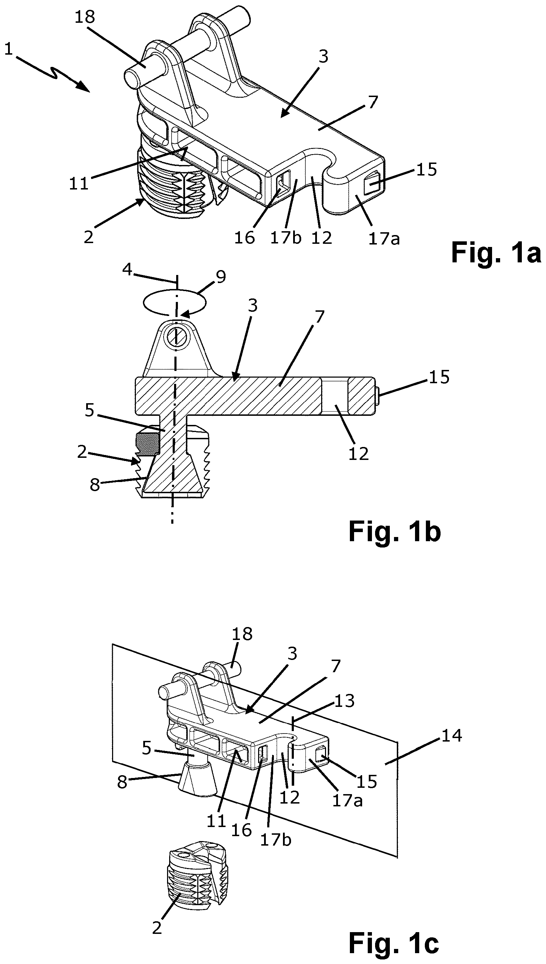

Fig. 1-3a, zeigen ein Beschlagteil eines erfindungsgemäßen Beschlags. Das in **Fign. 1 bis 3** gezeigte Beschlagteil 1 dient zur werkzeuglosen Befestigung in einer Bohrung einer Möbelplatte. Nachfolgend wird der Beschlag 1 lediglich stellvertretend am Beispiel eines Frontanbindungsbeschlags beschrieben.

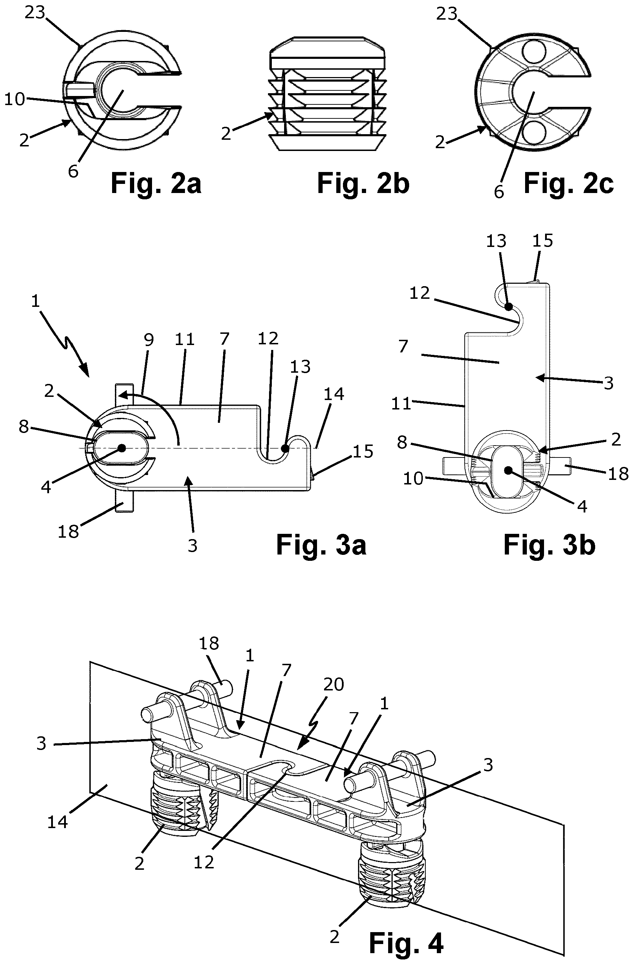

Das Beschlagteil 1 weist eine radial nach außen aufspreizbare Spreizmuffe 2 zum Einsetzen in die Bohrung und ein Beschlaggehäuse 3 auf, das in der Spreizmuffe 2 um eine Drehachse **4** drehbar zwischen einer Ausgangsdrehposition (Fig. 3a) und einer Enddrehposition (Fig. 3b) gelagert ist. Dazu ist ein Schaft **5** des Beschlaggehäuses 3 in einer Lageröffnung **6** der Spreizmuffe 2 um die Drehachse 4 drehbar gelagert. Die Spreizmuffe 2 kann, wie im Ausführungsbeispiel gezeigt, eine geschlitzte Hülse sein, die auf den Schaft 5 aufgeclipst ist, oder alternativ einen radial nach außen abspreizbaren Umfangswandabschnitt aufweisen. Bevorzugt ist die Spreizmuffe 2 aus Kunststoff und das Beschlaggehäuse 3 aus Metall (z.B. Zinkdruckguss) gebildet.

Das Beschlaggehäuse 3 hat einen außerhalb der Spreizmuffe 2 angeordneten Hebelarm **7,** der sich rechtwinklig zur Drehachse 4 erstreckt, und eine innerhalb der Spreizmuffe 2 angeordnete Spreizkontur **8,** welche - beim Drehen des Beschlaggehäuses 3 um 90° in Spreizdrehrichtung **9** von der Ausgangs- in die Enddrehposition - die Spreizmuffe 2 radial nach außen aufspreizt. Die Spreizkontur 8 kann eine bezüglich der Drehachse 4 exzentrische oder, wie im Ausführungsbeispiel gezeigt, ovale Außenkontur aufweisen. Der Abstand der Spreizkontur 8 zur Drehachse 4 nimmt entgegen der Spreizdrehrichtung 9 zu, um durch Drehen des Beschlaggehäuses 3 um 90° in Spreizdrehrichtung 9 die Spreizmuffe 2 radial nach außen aufzuspreizen. Die Spreizkontur 8 weist ihren maximalen Abstand zur Drehachse 4 bevorzugt in Richtung des Hebelarms 7 auf. Die Innenwandung der Spreizmuffe 2 hat bevorzugt eine der Spreizkontur 8 entsprechende, hier ovale, Innenkontur **10** und liegt in der Ausgangsdrehstellung ringsum an der Spreizkontur 8 an.

Die in Spreizdrehrichtung 9 vordere Seite **11** des Hebelarms 7 weist am freien Ende des Hebelarms 7 eine, gesehen in Spreizdrehrichtung 9, zurückversetzte Seitenkontur **12** auf, die punktsymmetrisch bezüglich einer Symmetrieachse **13** ist, welche parallel zur Drehachse 4 und in einer parallel zum Hebelarm 7 verlaufenden Radialebene **14** der Drehachse 4 liegt. Die zurückversetzte Seitenkontur 12 ist bevorzugt S-förmig, wie im Ausführungsbespiel gezeigt, oder stufenförmig ausgebildet, aber kann alternativ auch parallel oder schräg zur Radialebene 14 verlaufen. Der Hebelarm 7 weist außerdem eine Rasteinrichtung in Form eines Rastvorsprungs **15** und einer Rastmulde **16** auf, die an zwei der Drehachse 4 abgewandten Stirnseiten **17a, 17b** des Hebelarms 7 punktsymmetrisch bezüglich der Symmetrieachse 13 angeordnet sind. Das Beschlaggehäuse 3 trägt noch ein Anbindungselement, hier in Form einer Querstange **18,** die quer zur Radialebene 14 ausgerichtet ist.

**Fig. 4** zeigt einen Frontanbindungsbeschlag 20, der aus zwei ineinandergreifenden, identischen Beschlagteilen 1 gebildet ist. Die beiden Beschlagteile 1 sind zueinander um 180° verdreht angeordnet, so dass die Radialebenen 14 der beiden Beschlagteile 1 eine gemeinsame Ebene ausbilden. Die freien Enden der beiden Hebelarme 7 liegen stirnseitig aneinander an, wobei die S-förmigen Seitenkonturen 12 der beiden Beschlagteile 1 wechselseitig ineinandergreifen und wobei der Rastvorsprung 15 des einen Beschlagteils 1 in die Rastmulde 16 des anderen Beschlagteils 1 eingreift.

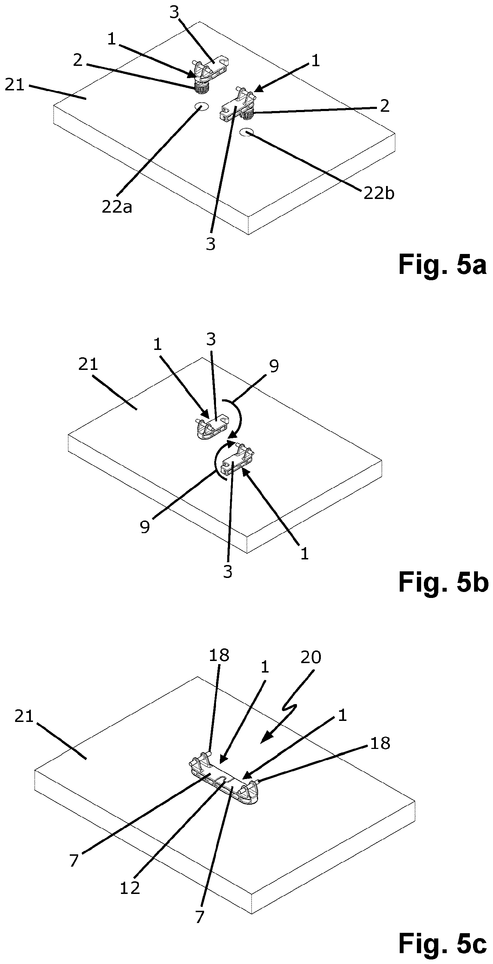

In **Fign. 5a-5c** ist die Montage des Frontanbindungsbeschlags 20 an einer Möbelplatte, z.B. an einer Frontplatte **21,** gezeigt. In die Frontplatte 21 werden zwei Bohrungen **22a, 22b** (z.B. Ø10mm, 11mm tief) mit einem Abstand von z.B. 46mm gebohrt. Mit einem 180°-Versatz zueinander werden das eine Beschlagteil 1 mit seiner Spreizmuffe 2 in die eine Bohrung 22a und das andere Beschlagteil 1 mit seiner Spreizmuffe 2 in die andere Bohrung 22b werkzeuglos eingepresst (Fig. 5a), wodurch die Spreizmuffen 2 drehfest in den Bohrungen 22a, 22b verankert sind. Wie in Fign. 2a, 2c gezeigt ist, weist die Spreizmuffe 2 am Außenumfang mehrere radial nach außen vorstehende, spitze Vorsprünge **23** auf, die sich in die Bohrungswandung eindrücken und dadurch die Spreizmuffe 2 drehfest in der Bohrung halten. Anschließend werden die Beschlaggehäuse 3 der beiden Beschlagteile 1 vom Nutzer werkzeuglos innerhalb den Spreizmuffen 2 jeweils um 90° in Spreizdrehrichtung 9 in die Enddrehposition gedreht (Fig. 5b). Dadurch werden die Spreizmuffen 2 von den Spreizkonturen 8 der Beschlagteile 1 jeweils radial nach außen aufgespreizt und in den Bohrungen 22a, 22b verspannt. Die S-förmigen Seitenkonturen 12 der beiden Beschlagteile 1 greifen wechselseitig ineinander und sichern so die beiden Beschlaggehäuse 3 gegenseitig vor einem Überdrehen (Fig. 5c). Der Rastvorsprung 15 des einen Beschlagteils 1 greift in die Rastmulde 16 des anderen Beschlagteils 1 ein, wodurch die beiden Beschlagteile 1 in ihren Enddrehpositionen miteinander verrastet sind. Mittels der beiden zueinander parallel versetzten Querstangen 18 kann der Frontanbindungsbeschlag 20 samt Frontplatte 21 dann an einem Korpusbeschlag (nicht gezeigt) befestigt werden.

## Patentansprüche

1. Beschlag (20) aus zwei im montierten Zustand miteinander zusammenwirkenden Beschlagteilen (1) zur werkzeuglosen Befestigung jeweils in einer Bohrung (22a, 22b) einer Platte, insbesondere Möbelplatte (21), wobei jedes der beiden Beschlagteile (1) aufweist:
- eine radial nach außen aufspreizbare Spreizmuffe (2) zum Einsetzen in die Bohrung (22a, 22b), und
- ein in der Spreizmuffe (2) um eine Drehachse (4) drehbar zwischen einer Ausgangsdrehposition und einer Enddrehposition gelagertes Beschlaggehäuse (3) mit einem außerhalb der Spreizmuffe (2) angeordneten Hebelarm (7), welcher eine Rasteinrichtung (15, 16) aufweist, und mit einer innerhalb der Spreizmuffe (2) angeordneten Spreizkontur (8), welche, beim Drehen des Beschlaggehäuses (3) in Spreizdrehrichtung (9) von der Ausgangs- in die Enddrehposition, die Spreizmuffe (2) radial nach außen aufspreizt,
wobei, wenn die beiden Beschlagteile (1) zueinander um 180° verdreht angeordnet sind, ihre Hebelarme (7) entlang einer Linie ausgerichtet sind, die freien Enden der beiden Hebelarme (7) stirnseitig aneinander anliegen und die Rasteinrichtungen (15, 16) der beiden Beschlagteile miteinander zusammenwirken.

2. Beschlag nach Anspruch 1, **dadurch gekennzeichnet, dass** die Spreizkontur (8) als eine bezüglich der Drehachse (4) exzentrische oder ovale Außenkontur ausgeführt ist.

3. Beschlag nach Anspruch 1 oder 2, **dadurch gekennzeichnet, dass** die Spreizkontur (8) ihren maximalen Abstand zur Drehachse (4) in Richtung des Hebelarms (7) oder rechtwinklig dazu aufweist.

4. Beschlag nach einem der vorhergehenden Ansprüche, **dadurch gekennzeichnet, dass** die in Spreizdrehrichtung (9) vordere Seite (11) des Hebelarms (7) am freien Ende des Hebelarms (7) eine, gesehen in Spreizdrehrichtung (9), zurückversetzte Seitenkontur (12) aufweist.

5. Beschlag nach Anspruch 4, **dadurch gekennzeichnet, dass** die zurückversetzte Seitenkontur (12) punktsymmetrisch bezüglich einer Symmetrieachse (13) ist, welche parallel zur Drehachse (4) verläuft und in einer Radialebene (14) der Drehachse (4) liegt.

6. Beschlag nach Anspruch 4 oder 5, **dadurch gekennzeichnet, dass** die zurückversetzte Seitenkontur (12) parallel oder schräg zur Radialebene (14) der Drehachse (4) oder stufen- oder S-förmig ausgebildet ist.

7. Beschlag nach einem der vorhergehenden Ansprüche, **dadurch gekennzeichnet, dass** die Rasteinrichtung einen Rastvorsprung (15) und eine Rastmulde (16) aufweist.

8. Beschlag nach Anspruch 7, **dadurch gekennzeichnet, dass** der Rastvorsprung (15) und die Rastmulde (16) an zwei der Drehachse (4) abgewandten Stirnseiten (17a, 17b) des Hebelarms (7) punktsymmetrisch bezüglich einer Symmetrieachse (13) angeordnet sind, welche parallel zur Drehachse (4) verläuft und in einer parallel zum Hebelarm (7) verlaufenden Radialebene (14) der Drehachse (4) liegt.

9. Beschlag nach einem der vorhergehenden Ansprüche, **dadurch gekennzeichnet, dass** das Beschlaggehäuse (3) einen Schaft (5) aufweist, der in einer Lageröffnung (6) der Spreizmuffe (2) um die Drehachse (4) drehbar gelagert ist.

10. Beschlag nach einem der vorhergehenden Ansprüche, **dadurch gekennzeichnet, dass** die Spreizmuffe (2) geschlitzt und auf einen Schaft (5) des Beschlaggehäuses (3) aufgeclipst ist.

11. Beschlag nach einem der vorhergehenden Ansprüche, **dadurch gekennzeichnet, dass** das Beschlaggehäuse (3) ein Anbindungselement (18) zur Anbindung an ein weiteres Element aufweist.

12. Beschlag nach Anspruch 11, **dadurch gekennzeichnet, dass** das Anbindungselement als Stange (18) ausgebildet ist, die rechtwinklig zum Hebelarm (5) verläuft.

13. Beschlag nach einem der vorhergehenden Ansprüche, **dadurch gekennzeichnet, dass** die beiden Beschlagteile (1) identisch sind.

14. Anordnung mit einer Platte, insbesondere Möbelplatte (21), mit zwei Bohrungen (22a, 22b) und mit einem Beschlag (20) nach einem der vorhergehenden Ansprüche, wobei das eine Beschlagteil (1) mit seiner Spreizmuffe (2) in die eine Bohrung (22a) und das andere Beschlagteil (1) mit seiner Spreizmuffe (2) in die andere Bohrung (22b) eingesetzt und jeweils in die Enddrehposition gedreht sind und wobei in den Enddrehpositionen der beiden Beschlagteile (1) die beiden Beschlagteile (1) zueinander um 180° verdreht angeordnet sind, ihre Hebelarme (5) entlang einer Linie ausgerichtet sind, die freien Enden der beiden Hebelarme (7) stirnseitig aneinander anliegen und die Rasteinrichtungen (15, 16) der beiden Beschlagteile miteinander zusammenwirken.

## Claims

1. Fitting (20) comprising two fitting parts (1) which cooperate with one another in a mounted state for tool-free fastening each in a bore (22a, 22b) in a panel, in particular a furniture panel (21), each of the two fitting parts (1) comprising:
- a radially outwardly expandable expansion sleeve (2) for insertion into the bore (22a, 22b) and
- a fitting housing (3), which is mounted in the expansion sleeve (2) so as to be rotatable about an axis of rotation (4) between a starting rotary position and a final rotary position, has a lever arm (7) which is arranged outside the expansion sleeve (2) and has a latching device (15, 16), and has an expansion contour (8) which is arranged inside the expansion sleeve (2) and, upon rotation of the fitting housing (3) in the expansion direction of rotation (9) from the starting rotary position to the final rotary position, expands the expansion sleeve (2) radially outwards,
wherein, when the two fitting parts (1) are arranged in a manner rotated through 180° with respect to one another, their lever arms (7) are oriented along a line, the free ends of the two lever arms (7) bear against one another at their end faces, and the latching devices (15, 16) of the two fitting parts cooperate with one another.

2. Fitting according to claim 1, **characterized in that** the expansion contour (8) is embodied as an external contour that is eccentric or oval with respect to the axis of rotation (4).

3. Fitting according to claim 1 or 2, **characterized in that** the expansion contour (8) exhibits its maximum spacing from the axis of rotation (4) in the direction of the lever arm (7) or at right angles thereto.

4. Fitting according to one of the preceding claims, **characterized in that** the front side (11), in the expansion direction of rotation (9), of the lever arm (7) has a set-back side contour (12), as seen in the expansion direction of rotation (9), at the free end of the lever arm (7).

5. Fitting according to claim 4, **characterized in that** the set-back side contour (12) is point symmetric with respect to an axis of symmetry (13) that extends parallel to the axis of rotation (4) and lies in a radial plane (14) of the axis of rotation (4).

6. Fitting according to claim 4 or 5, **characterized in that** the set-back side contour (12) is configured in a parallel or oblique manner with respect to the radial plane (14) of the axis of rotation (4) or in a stepped or S-shaped manner.

7. Fitting according to one of the preceding claims, **characterized in that** the latching device has a latching protrusion (15) and a latching recess (16).

8. Fitting according to claim 7, **characterized in that** the latching protrusion (15) and the latching recess (16) are arranged on two end faces (17a, 17b), remote from the axis of rotation (4), of the lever arm (7) in a point symmetric manner with respect to an axis of symmetry (13) that extends parallel to the axis of rotation (4) and lies in a radial plane (14), extending parallel to the lever arm (7), of the axis of rotation (4).

9. Fitting according to one of the preceding claims, **characterized in that** the fitting housing (3) has a shank (5) which is mounted in a bearing opening (6) of the expansion sleeve (2) so as to be rotatable about the axis of rotation (4).

10. Fitting according to one of the preceding claims, **characterized in that** the expansion sleeve (2) is slotted and clip-fastened onto a shank (5) of the fitting housing (3).

11. Fitting according to one of the preceding claims, **characterized in that** the fitting housing (3) has an attachment element (18) for attaching to a further element.

12. Fitting according to claim 11, **characterized in that** the attachment element is in the form of a rod (18) which extends at right angles to the lever arm (5).

13. Fitting according to one of the preceding claims, **characterized in that** the two fitting parts (1) are identical.

14. Arrangement comprising a panel, in particular a furniture panel (21), with two bores (22a, 22b) and comprising a fitting (20) according to one of the preceding claims, wherein the one fitting part (1) is inserted by way of its expansion sleeve (2) into the one bore (22a) and the other fitting part (1) is inserted by way of its expansion sleeve (2) into the other bore (22b), each fitting part being rotated into the final rotary position, and wherein, in the final rotary positions of the two fitting parts (1), the two fitting parts (1) are arranged in a manner rotated through 180° with respect to one another, their lever arms (5) are oriented along a line, the free ends of the two lever arms (7) bear against one another at their end faces, and the latching devices (15, 16) of the two fitting parts cooperate with one another.

## Revendications

1. Ferrure (20) constituée de deux pièces de ferrure (1) coopérant l'une avec l'autre à l'état monté pour une fixation sans outil respectivement dans un alésage (22a, 22b) d'une plaque, en particulier d'une plaque de meuble (21), chacune des deux pièces de ferrure (1) présentant :
- un manchon à expansion (2) expansible radialement vers l'extérieur pour une insertion dans l'alésage (22a, 22b), et
- un logement de ferrure (3) monté dans le manchon à expansion (2) pouvant tourner entre une position de rotation initiale et une position de rotation finale autour d'un axe de rotation (4), avec un bras de levier (7) agencé à l'extérieur du manchon à expansion (2), qui présente un dispositif d'encliquetage (15, 16), et avec un contour d'expansion (8) agencé à l'intérieur du manchon à expansion (2), qui, lors d'une rotation du logement de ferrure (3) dans une direction de rotation d'expansion (9), déploie le manchon à expansion (2) radialement vers l'extérieur à partir de la position de rotation initiale jusqu'à la position de rotation finale,
lorsque les deux pièces de ferrure (1) sont agencées tournées de 180° l'une par rapport à l'autre, leurs bras de levier (7) sont alignés le long d'une ligne, les extrémités libres des deux bras de levier (7) reposent l'une contre l'autre du côté avant et les dispositifs d'encliquetage (15, 16) des deux pièces de ferrure coopèrent l'un avec l'autre.

2. Ferrure selon la revendication 1, **caractérisée en ce que** le contour d'expansion (8) est réalisé sous la forme d'un contour extérieur excentrique ou ovale par rapport à l'axe de rotation (4).

3. Ferrure selon la revendication 1 ou 2, **caractérisée en ce que** le contour d'expansion (8) présente sa distance maximale par rapport à l'axe de rotation (4) dans la direction du bras de levier (7) ou perpendiculairement par rapport à celle-ci.

4. Ferrure selon l'une quelconque des revendications précédentes, **caractérisée en ce que** le côté avant (11) du bras de levier (7) dans la direction de rotation d'expansion (9) présente, au niveau de l'extrémité libre du bras de levier (7), un contour latéral en retrait (12), vu dans la direction de rotation d'expansion (9).

5. Ferrure selon la revendication 4, **caractérisée en ce que** le contour latéral en retrait (12) est symétrique par rapport à un axe de symétrie (13) qui s'étend parallèlement à l'axe de rotation (4) et qui se trouve dans un plan radial (14) de l'axe de rotation (4).

6. Ferrure selon la revendication 4 ou 5, **caractérisée en ce que** le contour latéral en retrait (12) est réalisé parallèlement ou obliquement par rapport au plan radial (14) de l'axe de rotation (4) ou en forme de gradin ou de S.

7. Ferrure selon l'une quelconque des revendications précédentes, **caractérisée en ce que** le dispositif d'encliquetage présente une saillie d'encliquetage (15) et un creux d'encliquetage (16).

8. Ferrure selon la revendication 7, **caractérisée en ce que** la saillie d'encliquetage (15) et le creux d'encliquetage (16) sont agencés au niveau de deux côtés avant (17a, 17b) du bras de levier (7) opposés à l'axe de rotation (4) à symétrie ponctuelle par rapport à un axe de symétrie (13) qui s'étend parallèlement à l'axe de rotation (4) et qui se trouve dans un plan radial (14) de l'axe de rotation (4) s'étendant parallèlement au bras de levier (7).

9. Ferrure selon l'une quelconque des revendications précédentes, **caractérisée en ce que** le logement de ferrure (3) présente un arbre (5) qui est monté pouvant tourner autour de l'axe de rotation (4) dans une ouverture de palier (6) du manchon à expansion (2).

10. Ferrure selon l'une quelconque des revendications précédentes, **caractérisée en ce que** le manchon à expansion (2) est fendu et clipsé sur un arbre (5) du logement de ferrure (3).

11. Ferrure selon l'une quelconque des revendications précédentes, **caractérisée en ce que** le logement de ferrure (3) présente un élément de liaison (18) pour une liaison à un autre élément.

12. Ferrure selon la revendication 11, **caractérisée en ce que** l'élément de liaison est réalisé sous la forme d'une tige (18) qui s'étend perpendiculairement par rapport au bras de levier (5).

13. Ferrure selon l'une quelconque des revendications précédentes, **caractérisée en ce que** les deux pièces de ferrure (1) sont identiques.

14. Agencement comprenant une plaque, en particulier une plaque de meuble (21), deux alésages (22a, 22b) et une ferrure (20) selon l'une quelconque des revendications précédentes, une première partie de ferrure (1) étant insérée dans un premier alésage (22a) via son manchon à expansion (2) et l'autre partie de ferrure (1) étant insérée dans l'autre alésage (22b) via son manchon à expansion (2), et les deux étant tournées respectivement dans la position de rotation finale, et dans les positions de rotation finale des deux pièces de ferrure (1), les deux pièces de ferrure (1) étant agencées tournées de 180° l'une par rapport à l'autre, leurs bras de levier (5) étant alignés le long d'une ligne, les extrémités libres des deux bras de levier (7) reposant l'une contre l'autre du côté avant et les dispositifs d'encliquetage (15, 16) des deux pièces de ferrure coopérant l'une avec l'autre.
